(19) Europäisches Patentamt
European Patent Office
Office européen des brevets

(11) **EP 2 505 965 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(51) Int Cl.:
*G01D 1/16* (2006.01)     *G01D 5/244* (2006.01)

(21) Anmeldenummer: **11194879.0**

(22) Anmeldetag: **21.12.2011**

(54) **Verfahren und Überwachungseinheit zur Überprüfung von Positionswerten**

Method and monitoring unit for testing position values

Procédé et unité de surveillance destinés à la vérification de valeurs de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2011 DE 102011006300**

(43) Veröffentlichungstag der Anmeldung:
**03.10.2012 Patentblatt 2012/40**

(73) Patentinhaber: **Dr. Johannes Heidenhain GmbH 83301 Traunreut (DE)**

(72) Erfinder:
• **von Berg, Martin
83236 Übersee (DE)**
• **Schlicksbier, Thilo
83278 Traunstein (DE)**

(56) Entgegenhaltungen:
**EP-A2- 2 023 092     EP-A2- 2 072 964
US-A1- 2004 107 068**

EP 2 505 965 B1

**Beschreibung**

Die Erfindung betrifft ein Verfahren zur Überprüfung von Positionswerten nach Anspruch 1, sowie eine Überwachungseinheit zur Überprüfung von Positionswerten nach Anspruch 6. Weiter betrifft die Erfindung eine Antriebssteuerung mit einer erfindungsgemäßen Überwachungseinheit nach Anspruch 10.

US2004107068 offenbart solch ein Überprüfungsverfahren mit Berechnung eines zu erwartenden Positionswertes.

Um in der Automatisierungstechnik Bewegungsabläufe an Maschinen, insbesondere Werkzeugmaschinen, Produktionsanlagen und Roboterarmen, kontrollieren zu können, werden Antriebsregelungen eingesetzt. Deren Funktionsprinzip ist es, Bewegungssollwerte in Ansteuersignale für Motoren umzusetzen, die durch die Motoren bewirkte Bewegung als Istwerte mittels Positionsmessgeräten zu messen und die Ansteuersignale so anzupassen, dass Soll- und Istwerte bestmöglich übereinstimmen.

Für derartige Antriebsregelungen werden vermehrt Positionsmessgeräte eingesetzt, die einen absoluten Positionswert zur Verfügung stellen. Dadurch entfallen bestimmte Nachteile sogenannter inkrementaler Positionsmessgeräte, wie z.B. die Notwendigkeit, nach dem Einschalten eine Referenzfahrt vornehmen zu müssen, um eine Referenzposition zu finden, die als Bezugspunkt für die weitere Positionsmessung durch Zählen von Teilungsstrichen dient.

Für die Übertragung der absoluten Positionswerte kommen hauptsächlich serielle Datenschnittstellen zum Einsatz, da diese mit nur wenigen Datenübertragungsleitungen auskommen und trotzdem hohe Datenübertragungsraten aufweisen. In der Automatisierungstechnik hat sich eine Vielzahl von Standardschnittstellen durchgesetzt, populäre Vertreter für serielle Schnittstellen für Positionsmessgeräte sind beispielsweise die EnDat-Schnittstelle der Anmelderin, eine weitere ist unter der Bezeichnung SSI bekannt. Die Grundlage der EnDat-Schnittstelle ist in der EP0660209B2 beschrieben, die Funktion der SSI-Schnittstelle in der EP0171579A1.

Da Positionswerte, die in absoluten Positionsmessgeräten erzeugt und über serielle Schnittstellen digital zur Antriebsregelung übertragen werden, letztlich die Bewegungsabläufe von Maschinen bestimmen, ist es für den sicheren Betrieb einer Maschine von entscheidender Bedeutung, Fehler bei der Erzeugung und Übertragung der Positionswerte zu vermeiden, bzw., wenn doch ein Fehler auftreten sollte, diesen mit möglichst hoher Wahrscheinlichkeit zu entdecken, bevor er sich auf einen Bewegungsablauf auswirken kann. Andernfalls kann bereits ein einziges fehlerhaft erzeugtes oder übertragenes Bit in einem Positionswert eine unkontrollierbare, unvorhersehbare und sprunghafte Bewegung der Maschine bewirken. Dabei können, neben einem erheblichen Schaden an der Maschine, auch lebensgefährliche Situationen für Bedienpersonal auftreten, das sich im Wirkungsbereich der Maschine aufhält. Das Erkennen fehlerhafter Positionswerte hat daher in der Automatisierungstechnik höchste Priorität.

Somit ist es Aufgabe der Erfindung, ein Verfahren anzugeben, mit dem fehlerhafte Positionswerte erkannt werden.

Diese Aufgabe wird gelöst durch ein Verfahren nach Anspruch 1. Vorteilhafte Details des Verfahrens ergeben sich aus den von Anspruch 1 abhängigen Ansprüchen.

Es wird nun ein Verfahren zur Überprüfung von Positionswerten mit einer Überwachungseinheit, der in Zeitabständen eines Abfrageintervalls Positionswerte eines Positionsmessgeräts zugeführt werden, vorgeschlagen, das folgende Schritte aufweist:

- Berechnen eines Bewegungswertes aus wenigstens zwei Positionswerten und dem zeitlichen Abstand ihres Eintreffens,
- Berechnen eines Erwartungswertes für einen zu überprüfenden Positionswert, der auf die wenigstens zwei Positionswerte folgt, durch Addition des aktuellsten der wenigstens zwei Positionswerte und einer Positionsänderung, die sich aus dem Bewegungswert und der Zeit bis zum Eintreffen des zu überprüfenden Positionswertes ergibt,
- Bestimmen eines Positionserwartungsintervalls aus dem Erwartungswert und einem maximalen Positionsintervall,
- Vergleichen des zu überprüfenden Positionswertes mit dem Positionserwartungsintervall und
- Ausgeben eines Signals, dass das Ergebnis des Vergleichs anzeigt.

Weiter ist es Aufgabe der Erfindung, eine Überwachungseinheit anzugeben, mit dem fehlerhafte Positionswerte erkannt werden.

Diese Aufgabe wird gelöst durch eine Überwachungseinheit nach Anspruch 6. Vorteilhafte Details der Überwachungseinheit ergeben sich aus den von Anspruch 6 abhängigen Ansprüchen.

Eine erfindungsgemäße Überwachungseinheit zur Überprüfung von Positionswerten, die von einem Positionsmessgerät zu einer Antriebssteuerung in zeitlichen Abständen eines Abfrageintervalls übertragen werden, umfasst

- eine Verarbeitungseinheit, der die Positionswerte zugeführt sind und die eingerichtet ist zum Berechnen eines Bewegungswertes aus wenigstens zwei Positionswerten und dem zeitlichen Abstand ihres Eintreffens, zum Berechnen eines Erwartungswertes für einen zu überprüfenden Positionswert, der auf die wenigstens zwei Positionswerte folgt, durch Addition des aktuellsten der wenigstens zwei Positionswerte und einer Positionsänderung, die sich aus dem Bewegungswert und der Zeit bis zum Eintreffen des zu überprüfenden Positionswertes ergibt und zum Bestimmen eines Positionserwartungsintervalls aus dem Erwartungswert und einem maximalen Positionsintervall, sowie mit

- einer Vergleichereinheit, mit der der zu überprüfende Positionswert mit dem Positionserwartungsintervall vergleichbar ist und von der ein Signal ausgebbar ist, dass das Ergebnis des Vergleichs anzeigt.

Besonders vorteilhaft ist es, wenn die Bestimmung des Positionserwartungsintervalls bereits vor dem Eintreffen des zu überprüfenden Positionswertes abgeschlossen ist. Das Ergebnis der Überprüfung durch Vergleich in der Vergleichereinheit liegt dann bereits unmittelbar nach Eintreffen des zu prüfenden Positionswertes vor.

Weitere Vorteile sowie Einzelheiten der vorliegenden Erfindung ergeben sich aus der nachfolgenden Beschreibung eines bevorzugten Verfahrens, sowie einer erfindungsgemäßen Überwachungseinheit zur Überprüfung von Positionswerten anhand der Figuren. Dabei zeigt

Figur 1     ein Blockdiagramm einer Antriebsregelung,
Figur 2     ein Blockdiagramm einer erfindungsgemäßen Überwachungseinheit,
Figur 3     ein Diagramm eines Bewegungsablaufs und
Figur 4     ein Ablaufdiagramm eines erfindungsgemäßen Verfahrens.

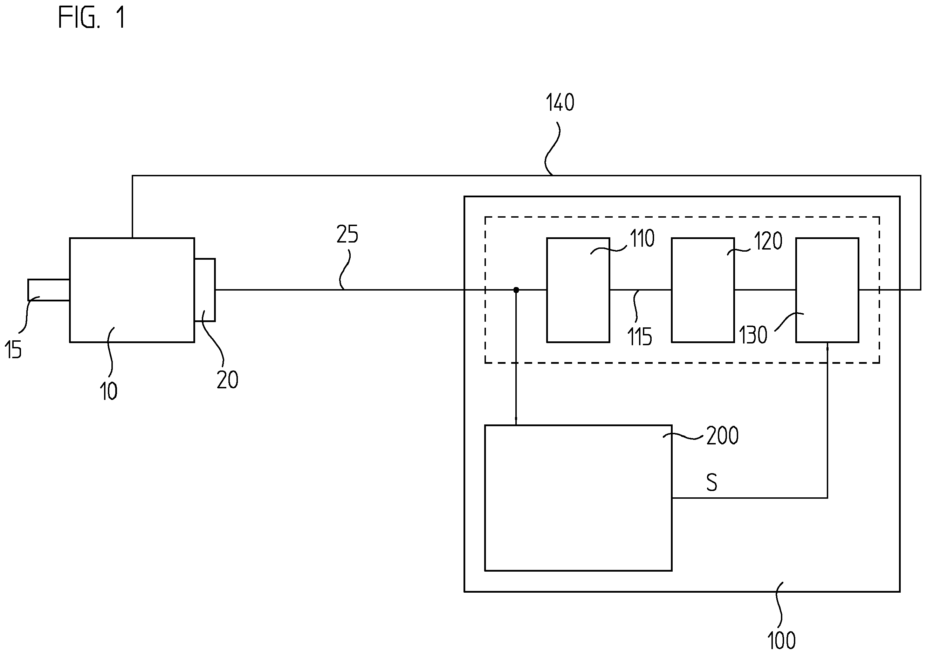

Figur 1 zeigt ein Blockdiagramm einer Antriebsregelung. Der Antrieb erfolgt in diesem Beispiel mittels eines Motors 10, dessen Motorwelle 15 ein Maschinenteil bewegt. Die Drehung der Motorwelle 15, die ein Maß für die Bewegung des Maschinenteils ist, wird mit einem Positionsmessgerät 20 in Form eines Motordrehgebers gemessen. Die Motorwelle 15 ist hierzu mit der Welle des Motordrehgebers drehfest verbunden.

An Stelle des Motordrehgebers kann als Positionsmessgerät 20 natürlich auch ein Längenmessgerät verwendet werden, beispielsweise um eine Linearbewegung des bewegten Maschinenteils zu messen, die durch die Rotation der Motorwelle 15 hervorgerufen wird. Ebenso kann es sich beim Motor 10 um einen Linearmotor handeln.

Zur Übertragung der mit dem Positionsmessgerät 20 gemessenen Positionswerte φi zu einer Antriebssteuerung 100 ist das Positionsmessgerät 20 mittels eines Datenübertragungskanals 25 mit der Antriebssteuerung 100 verbunden.

Die Antriebssteuerung 100 umfasst eine Schnittstelleneinheit 110, eine Reglereinheit 120 und eine Umrichtereinheit 130. Die Aufgabe der Reglereinheit 120 ist es, den Motor 10 so anzusteuern, dass er Bewegungsabläufe ausführt, die beispielsweise durch ein Computerprogramm, insbesondere ein NC-Programm, vorgegeben sind. Die Reglereinheit 120 erzeugt hierzu Sollwerte, vergleicht diese mit Istwerten (Positionswerten des Positionsmessgeräts) und berechnet hieraus Ansteuersignale für die Umrichtereinheit 130. Die Umrichtereinheit 130 setzt die Ansteuersignale wiederum in Motorsteuersignale um, die dem Motor 10 zugeführt werden. Der Motor 10 ist mit der Umrichtereinheit 130 zu diesem Zweck mit einem Motorkabel 140 verbunden.

Zur Anforderung aktueller Positionswerte φi vom Positionsmessgerät 20 ist die Reglereinheit 120 über eine interne Schnittstelle 115 mit der Schnittstelleneinheit 110 verbunden. Diese kommuniziert über den Datenübertragungskanal 25 entsprechend einem Schnittstellenprotokoll mit einer (nicht dargestellten) Schnittstelleneinheit im Positionsmessgerät 20. Die für die Kommunikation notwendigen Schnittstellensignale umfassen Befehle, unter anderem Positionsanforderungsbefehle, die von der Antriebssteuerung 100 an das Positionsmessgerät 20 gesendet werden, sowie Daten, insbesondere Positionswerte φi, die vom Positionsmessgerät 20 zur Antriebssteuerung gesendet werden. Darüber hinaus können die Schnittstellensignale ein Taktsignal zur Synchronisation der Datenübertragung umfassen.

Der Vergleich von Soll- und Istwerten, sowie die Berechnung der Ansteuersignale für die Umrichtereinheit 130 erfolgt nicht kontinuierlich, sondern in diskreten Zeitabständen, die durch die sog. Reglerzykluszeit festgelegt sind. Typische Werte für die Reglerzykluszeit liegen im Bereich weniger Mikrosekunden bis zu einigen Millisekunden. Die Reglerzykluszeit gibt auch das Abfrageintervall $\Delta t$ vor, in dem Positionswerte φi während eines Regelvorgangs über die Schnittstelleneinheit 110 vom Positionsmessgerät 20 angefordert werden.

Erfindungsgemäß sind nun Schnittstellensignale, die Positionswerte φi umfassen, nicht nur der Reglereinheit 120, sondern zur Überprüfung auf Fehler auch einer Überwachungseinheit 200 zugeführt. Dies kann, wie in Figur 1 dargestellt, dadurch erfolgen, dass die Überwachungseinheit 200, parallel zur Schnittstelleneinheit 110, mit dem Datenübertragungskanal 25 verbunden ist. Alternativ (nicht dargestellt) kann die Überwachungseinheit 200 aber auch mit der internen Schnittstelle 115 verbunden sein. In beiden Fällen bleibt jedoch die ursprüngliche Datenverbindung vom Positionsmessgerät 20 über den Datenübertragungskanal 25, die Schnittstelleneinheit 110 und die interne Schnittstelle 115 zur Reglereinheit 120 erhalten. Dies hat den besonderen Vorteil, dass die Antriebsregelung, wie im Stand der Technik bekannt, auch ohne die erfindungsgemäße Überwachungseinheit 200 betrieben werden kann. Die Überwachungseinheit 200 kann daher als unabhängiges Zusatzmodul ausgeführt sein, das nur dann zum Einsatz kommt, wenn der Antrieb besonders hohe Anforderungen an die Sicherheit stellt, beispielsweise wenn sich Bedienpersonal im Arbeitsbereich einer Maschine aufhalten kann. Die Überwachungseinheit 200 gibt das Ergebnis der Überprüfung in Form eines Signals S an die Umrichtereinheit 130, oder auch (nicht dargestellt) an die Reglereinheit 120 aus, so dass geeignete Maßnahmen ergriffen werden können, wie beispielsweise das Anhalten des Motors oder das Stillsetzen der gesamten Maschine, in der der überwachte Antrieb betrieben wird.

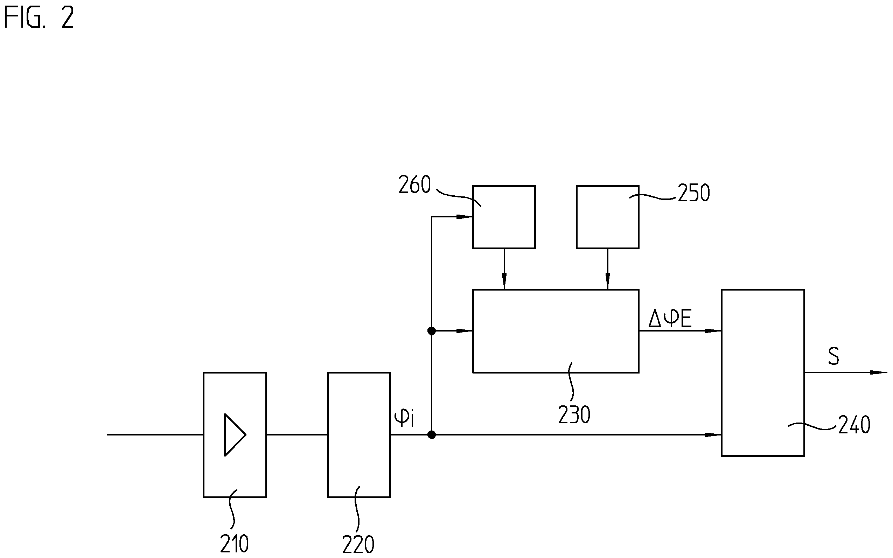

Figur 2 zeigt ein Blockdiagramm einer erfindungsgemäßen Überwachungsreinheit 200. Die Schnittstellensignale, die vom Datenübertragungskanal 25 oder der internen Schnittstelle 115 bei der Überwachungseinheit 200 eintreffen, sind zuerst einer Empfängereinheit 210 zugeführt. Diese ist besonders dann notwendig, wenn der Datenübertragungskanal 25 als Quelle für die Schnittstellensignale dient, da die Datenübertragung über längere Kabelverbindungen meist differentiell, insbesondere nach dem RS-485-Standard, erfolgt. In diesem Fall wandelt die Empfängereinheit 210 die differentiellen in massebezogene Schnittstellensignale um. Bei Verwendung der internen Schnittstelle 115 als Datenquelle kann die Empfängereinheit 210 Datentreiberbausteine zur Entkopplung der Datensignale umfassen, oder ggf. ganz entfallen.

Die auf diese Weise aufbereiteten Schnittstellensignale sind einer Protokolleinheit 220 zugeführt. Da die Schnittstellensignale den gesamten Datenverkehr zwischen Reglereinheit 120, bzw. Schnittstelleneinheit 110 und dem Positionsmessgerät 20 umfassen, separiert die Protokolleinheit 220 aus den Schnittstellensignalen die für die weitere Verarbeitung relevanten Positionswerte $\varphi i$ und führt sie einer Verarbeitungseinheit 230 zu.

Die Verarbeitungseinheit 230 berechnet aus wenigstens zwei vorhergehenden Positionswerten $\varphi i$ und dem zeitlichen Abstand ihres Eintreffens einen Bewegungswert $\omega$, bei dem es sich im bevorzugten und zugleich einfachsten Fall um eine Schätzung der Geschwindigkeit (im vorliegenden Beispiel der Winkelgeschwindigkeit) durch Bildung des Differenzenquotienten aus den beiden zuletzt eingetroffenen Positionswerten $\varphi i-1$, $\varphi i-2$ und dem Abfrageintervall $\Delta t$ handelt. Weitere geeignete Bewegungswerte $\omega$ sind Beschleunigungswerte oder ein Ruck, also eine zeitliche Änderung einer Beschleunigung. Durch Addition des aktuellsten der zur Ermittlung des Bewegungswertes $\omega$ verwendeten Positionswerte und der Positionsänderung, die sich durch den Bewegungswert $\omega$ und der bekannten Zeit bis zum Eintreffen eines zu überprüfenden Positionswertes (bei der es sich im bevorzugten Fall wiederum um das Abfrageintervall $\Delta t$ handelt) berechnet die Verarbeitungseinheit 230 dann einen Erwartungswert $\varphi E$ für den zu überprüfenden Positionswert $\varphi i$.

Da der Überwachungseinheit 200 lediglich die von der Reglereinheit 120 angeforderten Positionswerte $\varphi i$ vorliegen, ist die Berechnung des Erwartungswertes $\varphi E$ prinzipbedingt ungenau. So kann im obigen Beispiel der Bewegungswert $\omega$ (die Winkelgeschwindigkeit) nur dann genau bestimmt werden, wenn zwischen den zur Berechnung verwendeten Positionswerten $\varphi i-1$, $\varphi i-2$ eine konstante Winkelgeschwindigkeit vorliegt. Handelt es sich dagegen um eine beschleunigte Bewegung, so wird die Schätzung der Winkelgeschwindigkeit mit steigendem Betrag der Beschleunigung ungenauer. Naturgemäß erhält man eine maximale Abweichung bei der maximalen zulässigen Beschleunigung $\alpha max$, die im Positionsmessgerät 20 auftreten kann. Bei der maximal zulässigen Beschleunigung $\alpha max$ handelt es sich entweder um einen Grenzwert des Positionsmessgeräts 20 selbst, oder um einen Grenzwert des Motors 10, der ggf. wiederum von der maximal zulässigen Beschleunigung des von der Motorwelle 15 angetriebenen Maschinenteils abhängen kann. Darüber hinaus basiert auch die Berechnung des Erwartungswertes $\varphi E$ auf der Annahme, dass bei der Bewegung vom letzten erfassten Positionswert $\varphi i-1$ bis zum vorherzusagenden Positionswert $\varphi i$ eine konstante Winkelgeschwindigkeit vorliegt. Auch hier erhält man bei maximal möglicher Beschleunigung $\alpha max$ die maximale Abweichung vom tatsächlichen Wert. Trotz dieser Ungenauigkeiten kann aber durch Überlagerung der Extremfälle ein maximales Positionsintervall $\Delta\varphi$ angegeben werden, in dem, ausgehend vom Erwartungswert $\varphi E$, der zu überprüfende Positionswert $\varphi i$ liegen muss. Das maximale Positionsintervall $\Delta\varphi$ gibt also die größte Positionsänderung an, die unter Berücksichtigung des Fehlers bei der Bestimmung des Bewegungswertes $\omega$ und einer durch Antriebsparameter (z.B. maximale Beschleunigung) begrenzten maximalen Änderung des Positionswerts in der Zeit bis zum Eintreffen des zu überprüfenden Positionswerts $\varphi i$ auftreten kann.

Aus dem bekannten maximalen Positionsintervall $\Delta\varphi$ und dem berechneten Erwartungswert $\varphi E$ ermittelt die Verarbeitungseinheit 230 ein Positionserwartungsintervall $\Delta\varphi E$ und führt es einer Vergleichereinheit 240 zu.

Trifft nun der aktuelle, zu überprüfende Positionswert $\varphi i$ von der Protokolleinheit 220 bei der Vergleichereinheit 240 ein, vergleicht sie diesen Positionswert $\varphi i$ mit den Grenzen des Positionserwartungsintervalls $\Delta\varphi E$ und gibt ein Signal S aus, dass das Ergebnis des Vergleichs anzeigt.

Die Verwendung der beiden zuletzt eingetroffenen Positionswerte $\varphi i-1$, $\varphi i-2$ zur Ermittlung des Positionserwartungsintervalls $\Delta\varphi E$ für den unmittelbar auf die beiden zuletzt eingetroffenen Positionswerte $\varphi i-1$, $\varphi i-2$ folgenden, zu überprüfenden Positionswert $\varphi i$ ist in Bezug auf die Überwachungssicherheit optimal, da jeder Positionswert $\varphi i$ geprüft wird. Bei geringeren Anforderungen an die Überwachungssicherheit besteht aber auch die Möglichkeit, den Bewegungswert $\omega$ aus Positionswerten $\varphi i$, die im zeitlichen Abstand eines ersten ganzzahligen Vielfachen des Abfrageintervalls $N1*\Delta t$ bei der Überwachungseinheit 200 eintreffen, zu ermitteln. Ebenso kann das Positionserwartungsintervall $\Delta\varphi E$ für einen zukünftigen, im zeitlichen Abstand eines zweiten ganzzahligen Vielfachen des Abfrageintervalls $N2*\Delta t$ eintreffenden Positionswert $\varphi i$ berechnet werden. Beispielsweise kann jeder zehnte Positionswert $\varphi i$ ($N1=10$) für die Ermittlung des Bewegungswertes $\omega$ herangezogen werden und nur für jeden zehnten Positionswert $\varphi i$ ($N2=10$) ein Positionserwartungsintervall $\Delta\varphi E$ berechnet und der Vergleich durchgeführt werden.

Besonders vorteilhaft ist es, wenn alle zeitaufwändigen Berechnungen bereits vor Eintreffen des zu überprüfenden Positionswerts $\varphi i$ abgeschlossen sind, so dass nach dem Eintreffen des zu überprüfenden Positionswerts $\varphi i$ in der Vergleichereinheit 240 lediglich noch zwei digitale Vergleichsoperationen durchgeführt werden müssen. Da Vergleichsoperationen zu den in der Digitaltechnik am Schnellsten auszuführenden Operationen gehören, stehen in diesem Fall der Reglereinheit 130, bzw. der Umrichtereinheit 120 das Signal S und der aktuelle Positionswert $\varphi i$ praktisch gleichzeitig zur Verfügung. Eine Auswirkung eines fehlerhaften Positionswertes $\varphi i$ kann somit zuverlässig verhindert werden.

Mit Vorteil ist in der Überwachungseinheit 200 eine Speichereinheit 250 vorgesehen, in der Daten, die in der Verarbeitungseinheit 230 benötigt werden, insbesondere das für den Antrieb gültige maximale Positionsintervall $\Delta\varphi$, sowie das Abfrageintervall $\Delta t$, speicherbar sind. Um die Überwachungseinheit 200 flexibel einsetzen zu können, ist die Speichereinheit 250 bevorzugt als flüchtiger Speicher (RAM) oder als wiederbeschreibbarer nichtflüchtiger Speicher (EEPROM oder Flash-Speicher) ausgeführt. Das Beschreiben der Speichereinheit 250 kann über eine separate Schnittstelle, z.B. eine I2C-Schnittstelle, erfolgen, oder aber über die interne Schnittstelle 115, bzw. den Datenübertragungskanal 25.

Ebenso kann es vorteilhaft sein, in der Überwachungseinheit 200 weiter eine Zeitmesseinheit 260 vorzusehen, mit der das Abfrageintervall $\Delta t$ messbar ist. In diesem Fall kann darauf verzichtet werden, die Überwachungseinheit 200 auf einen festen Wert für das Abfrageintervall $\Delta t$ festzulegen, bzw. eine Möglichkeit zu schaffen, das Abfrageintervall $\Delta t$ zur Überwachungseinheit 200 zu übertragen und zu speichern. Aber auch wenn der Sollwert für das Abfrageintervall $\Delta t$ in der Überwachungseinheit 200 bekannt ist, kann die Zeitmesseinheit 260 dazu dienen, die Aufdeckwahrscheinlichkeit für fehlerhafte Positionswerte $\varphi i$ weiter zu verbessern, da mit ihr zum einen die Einhaltung des vorgegebenen Abfrageintervalls $\Delta t$ überprüfbar ist und zum anderen zugelassene zeitliche Schwankungen des Abfrageintervalls $\Delta t$ in der Verarbeitungseinheit 230 für die Berechnungen berücksichtigt werden können.

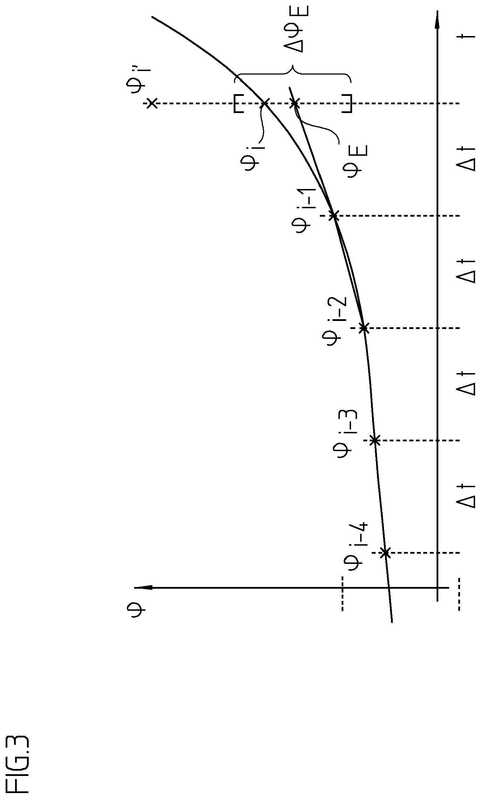

Figur 3 zeigt ein Diagramm eines Bewegungsablaufs zur Verdeutlichung der der Erfindung zugrunde liegenden Erkenntnis. Die horizontale Achse ist eine Zeitachse, in vertikaler Richtung sind Positionswerte $\varphi i$ aufgetragen, die in zeitlichen Abständen eines Abfrageintervalls $\Delta t$ bei der Überwachungseinheit 200 eintreffen. Wie die eingezeichnete Bahnkurve zeigt, findet zwischen den Positionswerten $\varphi i\text{-}4$ und $\varphi i\text{-}2$ eine Bewegung mit konstanter Geschwindigkeit statt, die ab dem Positionswert $\varphi i\text{-}2$ in eine beschleunigte Bewegung übergeht.

Zur Überprüfung eines Positionswertes $\varphi i$ wird nun zunächst mit Hilfe der Punkte $\varphi i\text{-}1$ und $\varphi i\text{-}2$ und dem bekannten Abfrageintervall $\Delta t$ durch Bildung des Differenzenquotienten ein geschätzter Wert für die Winkelgeschwindigkeit berechnet. Dieser wird als Bewegungswert $\omega$ dazu verwendet, den Erwartungswert $\varphi E$ zu ermitteln. Mit dem Erwartungswert $\varphi E$ als Mittelwert ergibt sich mit dem bekannten Positionsintervall $\Delta\varphi$ ein Positionserwartungsintervall $\Delta\varphi E$. Liegt nun der zu überprüfende, aktuell eintreffende Positionswert $\varphi i$ innerhalb dieses Positionserwartungsintervalls $\Delta\varphi E$, so kann mit sehr großer Wahrscheinlichkeit davon ausgegangen werden, dass kein Fehler vorliegt und der Positionswert $\varphi i$ korrekt erzeugt und übertragen wurde. Liegt er außerhalb des Positionserwartungsintervalls $\Delta\varphi E$ (in Figur 3 als $\varphi i'$ bezeichnet), so ist bei der Erzeugung oder Übertragung des Positionswertes $\varphi i$ ein Fehler aufgetreten.

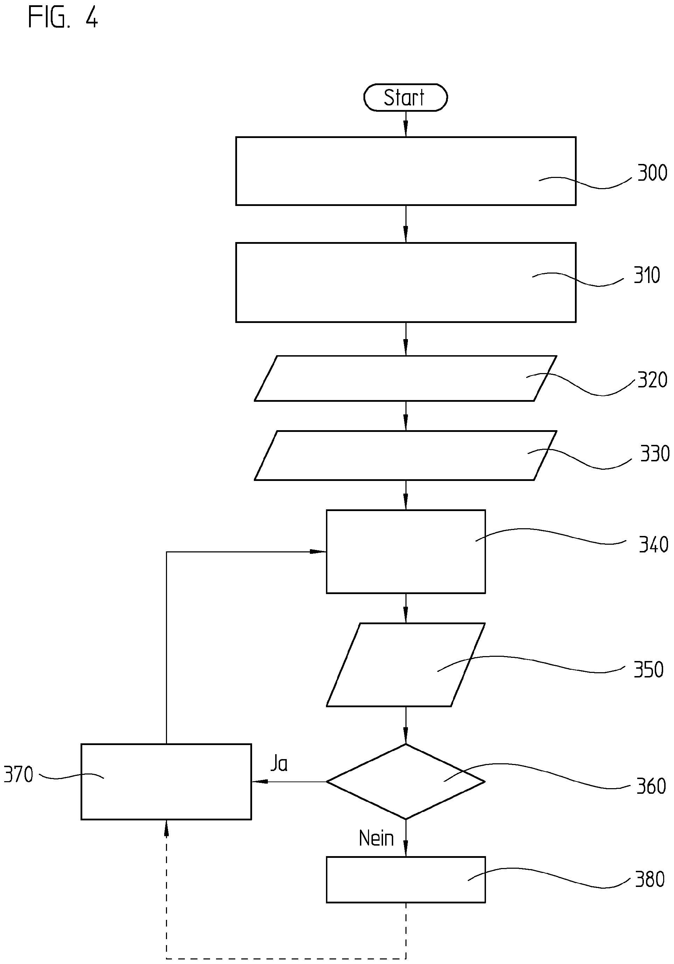

Figur 4 zeigt ein Ablaufdiagramm eines erfindungsgemäßen Verfahrens. Die Schritte 300 bis 330 werden, nach dem Einschalten, bzw. vor Beginn des Regelvorgangs, jeweils nur einmal vorbereitend ausgeführt, die Schritte 340 bis 370 bilden die eigentliche Hauptschleife des Verfahrens während einer laufenden Antriebsregelung, Schritt 380 dient zur Fehlerbehandlung, wenn ein fehlerhafter Positionswert aufgetreten ist.

Nach dem Einschalten werden in einem Schritt 300 zunächst die maximale Beschleunigung $\alpha max$ und das Abfrageintervall $\Delta t$ ermittelt, beispielsweise durch Auslesen aus der Speichereinheit 250. Mit Hilfe dieser Werte wird in einem Schritt 310 das maximale Positionsintervall $\Delta\varphi$ berechnet. Alternativ kann das maximale Positionsintervall $\Delta\varphi$ aber auch bereits in der Speichereinheit 250 abgespeichert sein. Da nach dem Einschalten noch keine aktuellen Positionswerte vorliegen, wird zunächst in Schritt 320 ein Positionswert $\varphi i\text{-}2$, dann in Schritt 330 ein Positionswert $\varphi i\text{-}1$ empfangen. Der Zeitpunkt des Beginns des Regelvorgangs, ab dem also kontinuierlich Positionswerte $\varphi i$ vom Positionsmessgerät 20 bei der Überwachungseinheit 200 eintreffen, kann der Überwachungseinheit 200 beispielsweise von der Reglereinheit 120 signalisiert werden.

Die Hauptschleife des Verfahrens beginnt mit dem Schritt 340, in dem die Ermittlung des Positionserwartungsintervall $\Delta\varphi E$ zusammengefasst ist. In der bevorzugten Ausführungsform wird zuerst durch Bildung des Differenzenquotienten aus den Positionswerten $\varphi i\text{-}1$, $\varphi i\text{-}2$ und dem Abfrageintervall $\Delta t$ der Bewegungswert $\omega$ (die Winkelgeschwindigkeit) berechnet. Ausgehend vom Positionswert $\varphi i\text{-}1$ wird anschließend der Erwartungswert $\varphi E$ durch Addition der Positionsänderung, die durch den Bewegungswert $\omega$ und das Abfrageintervall $\Delta t$ bestimmt ist, berechnet. Mit dem Erwartungswert $\varphi E$ und dem maximalen Positionsintervall $\Delta\varphi$ wird dann das Positionserwartungsintervall $\Delta\varphi E$ ermittelt.

In Schritt 350 wird der aktuelle, zu überprüfende Positionswert $\varphi i$ empfangen.

Die Überprüfung, ob der Positionswert $\varphi i$ innerhalb des Positionserwartungsintervalls $\Delta\varphi E$ liegt, wird in Schritt 360 durchgeführt. Es sei an dieser Stelle besonders darauf hingewiesen, dass in der bevorzugten Ausführung des Verfahrens zum Zeitpunkt des Empfangs des aktuellen Positionswertes $\varphi i$ bereits alle Berechnungen abgeschlossen sind und nur noch der einfache und schnelle Vergleich des Positionswertes φi mit dem Positionserwartungsintervall ΔφE notwendig ist, um einen Fehler zu erkennen.

Befindet sich der Positionswert φi innerhalb des Positionserwartungsintervalls ΔφE, wird mit Schritt 370 fortgefahren, in dem der bisherige Positionswert φi-1 dem Positionswert φi-2 und der Positionswert φi dem Positionswert φi-1 zugeordnet wird. Anschließend wird die Schleife mit der Wiederholung von Schritt 340 geschlossen.

Befindet sich der Positionswert φi nicht innerhalb des Positionserwartungsintervalls ΔφE, so erfolgt in Schritt 380 eine Fehlerbehandlung, beispielsweise signalisiert die Überwachungseinheit 200 der Reglereinheit 120 oder der Umrichtereinheit 130 mit dem Fehlersignal S einen Fehler. Je nach Fehlertoleranz der Antriebsregelung kann das Verfahren mit Schritt 380 abgebrochen, oder mit Schritt 370 fortgeführt werden.

Die Effektivität einer erfindungsgemäßen Überwachungseinheit 200 soll nun an einem konkreten Zahlenbeispiel gezeigt werden. Als Positionsmessgerät 20 soll ein Drehgeber verwendet werden, da bei diesen die höchsten Beschleunigungen auftreten können. Für dieses Beispiel wird eine maximale Beschleunigung von αmax = 10000 rad/s² angenommen. Ein typischer Wert für ein Abfrageintervall ist Δt = 256 μs. Als Bewegungswert ω wird wieder ein geschätzter Geschwindigkeitswert angenommen, der durch Bildung des Differenzenquotienten aus den beiden zuletzt eingetroffenen Positionswerten φi-2, φi-1 und dem Abfrageintervall Δt berechnet wird. Daraus ergibt sich bei maximaler Beschleunigung αmax ein maximaler Fehler von

$$\Delta\varphi 1 = \pm\ \alpha_{max} * \Delta t^2.$$

Für die Berechnung des Erwartungswerts φE tritt bei maximaler Beschleunigung αmax gegenüber einer konstanten Geschwindigkeit ein zusätzlicher Fehler von

$$\Delta\varphi 2 = \pm\ 0,5 * \alpha_{max} * \Delta t^2$$

auf. Durch ungünstige Überlagerung der Fehler Δφ1 und Δφ2 ergibt sich ein Positionsintervall Δφ von

$$\Delta\varphi = \pm\ 1,5 * \alpha_{max} * \Delta t^2.$$

Mit den oben angenommenen Werten errechnet sich ein Positionsintervall Δφ von ±0,562°. Bezogen auf eine volle Umdrehung des Drehgebers ergibt sich somit bereits für den ungünstigsten Fall ein Diagnosedeckungsgrad von über 99,6%! In der Praxis lassen sich wesentlich höhere Werte für den Diagnosedeckungsgrad erreichen, da die Trägheit des Motors 10, bzw. des bewegten Maschinenteils, die maximal auftretende Beschleunigung αmax erheblich reduziert.

Die beschriebenen Ausführungsbeispiele betreffen rotatorische Bewegungen. Für den Fachmann ist es aber selbstverständlich, dass eine erfindungsgemäße Überwachungseinheit, bzw. ein Verfahren zur Überwachung auch für lineare Bewegungen anwendbar ist.

Da die Überwachungseinheit 200 als rein digitale Schaltung darstellbar ist, ist sie besonders gut dafür geeignet, in einem programmierbaren Logikbaustein (z.B. FPGA) oder einer anwenderspezifischen integrierten Schaltung (ASIC) realisiert zu werden. Darüber hinaus besteht die Möglichkeit, für die Realisierung einen Mikrocontroller einzusetzen und das erfindungsgemäße Verfahren als Computerprogramm auszuführen. Weiter kann die Überwachungseinheit 200 aus einem Softwaremodul bestehen. Mit Vorteil kann dieses parallel zu und unabhängig von anderen Programmen auf einem Steuerrechner in der Reglereinheit 120 ablaufen.

Bei der Überwachungseinheit 200 handelt es sich um eine sicherheitsrelevante Einheit. Um einen internen Fehler der Überwachungseinheit 200 aufdecken zu können, ist es vorteilhaft, die Einheit ganz oder teilweise redundant auszuführen, um einen Kreuzvergleich ermittelter Werte (Positionsintervall φi, Erwartungswert φE, Positionserwartungsintervall ΔφE, Fehlersignal S) durchführen zu können. Ebenso sind bekannte Verfahren, wie z.B. Überprüfung, ob erzwungene Fehler zuverlässig erkannt werden ("Zwangsdynamisierung"), anwendbar.

Die beschriebenen Ausführungsformen einer Überwachungseinheit 200, sowie eines Verfahrens zur Überwachung einer Positionswerterfassung lassen sich im Rahmen der Erfindung selbstverständlich abwandeln und an verschiedenste Anforderungen anpassen.

**Patentansprüche**

1. Verfahren zur Überprüfung von Positionswerten (φi-2, φi-1, φi), mit einer Überwachungseinheit (200), der in Zeitabständen eines Abfrageintervalls (Δt) Positionswerte (φi-2, φi-1, φi) eines Positionsmessgeräts (20) zugeführt werden, mit folgenden Schritten:

• Berechnen eines Bewegungswertes (ω) aus wenigstens zwei Positionswerten (φi-2, φi-1) und dem zeitlichen Abstand ihres Eintreffens,
• Berechnen eines Erwartungswertes (φE) für einen zu überprüfenden Positionswert (φi), der auf die wenigstens zwei Positionswerte (φi-2, φi-1) folgt, durch Addition des aktuellsten der wenigstens zwei Positionswerte (φi-2, φi-1) und einer Positionsänderung, die sich aus dem Bewegungswert (ω) und der Zeit bis zum Eintreffen des zu überprüfenden Positionswertes (φi) ergibt,
• Bestimmen eines Positionserwartungsinter-

valls (ΔφE) aus dem Erwartungswert (φE) und einem maximalen Positionsintervall (Δφ), welches die größte Positionsänderung angibt, die unter Berücksichtigung des Fehlers bei der Bestimmung des Bewegungswertes ω auftreten kann,

• Vergleichen des zu überprüfenden Positionswertes (φi) mit dem Positionserwartungsintervall (ΔφE) und

• Ausgeben eines Signals (S), dass das Ergebnis des Vergleichs anzeigt.

2. Verfahren nach Anspruch 1, wobei der Bewegungswert (ω)

• ein Geschwindigkeitswert, oder
• ein Beschleunigungswert, oder
• ein Ruck

ist.

3. Verfahren nach Anspruch 1, wobei der Bewegungswert (ω) ein geschätzter Geschwindigkeitswert ist, der durch Bildung des Differenzenquotienten aus den beiden zuletzt bei der Überwachungseinheit (200) eingetroffenen Positionswerten (φi-2, φi-1) und dem Abfrageintervall (Δt) gebildet wird.

4. Verfahren nach einem der vorhergehenden Ansprüche, wobei die Bestimmung des Positionserwartungsintervalls (ΔφE) in der Zeit vor dem Eintreffen des zu überprüfenden Positionswertes (φi) erfolgt.

5. Verfahren nach einem der vorhergehenden Ansprüche, wobei das Abfrageintervall (Δt) in der Überwachungseinheit (200) mit einer Zeitmesseinheit (260) gemessen wird.

6. Überwachungseinheit zur Überprüfung von Positionswerten (φi-2, φi-1, φi), die von einem Positionsmessgerät (20) zu einer Antriebssteuerung (100) in zeitlichen Abständen eines Abfrageintervalls (Δt) übertragen werden, mit

• einer Verarbeitungseinheit (230), der die Positionswerte (φi-2, φi-1, φi) zugeführt sind und die eingerichtet ist zum Berechnen eines Bewegungswertes (ω) aus wenigstens zwei Positionswerten (φi-2, φi-1) und dem zeitlichen Abstand ihres Eintreffens, zum Berechnen eines Erwartungswertes (φE) für einen zu überprüfenden Positionswert (φi), der auf die wenigstens zwei Positionswerte (φi-2, φi-1) folgt, durch Addition des aktuellsten der wenigstens zwei Positionswerte (φi-2, φi-1) und einer Positionsänderung, die sich aus dem Bewegungswert (w) und der Zeit bis zum Eintreffen des zu überprüfenden Positionswertes (φi) ergibt und zum Bestimmen eines Positionserwartungsintervalls (ΔφE) aus dem Erwartungswert (φE) und einem maximalen Positionsintervall (Δφ), welches die größte Positionsänderung angibt, die unter Berücksichtigung des Fehlers bei der Bestimmung des Bewegungswertes ω auftreten kann, sowie mit

• einer Vergleichereinheit (240), mit der der zu überprüfende Positionswert (φi) mit dem Positionserwartungsintervall (ΔφE) vergleichbar ist und von der ein Signal (S) ausgebbar ist, dass das Ergebnis des Vergleichs anzeigt.

7. Überwachungseinheit nach Anspruch 6, wobei eine Protokolleinheit (220) vorgesehen ist, der Schnittstellensignale zugeführt sind und mit der Positionswerte (φi-2, φi-1, φi), die in den Schnittstellensignalen enthalten sind, separierbar und an die Verarbeitungseinheit 230 und die Vergleichereinheit 240 ausgebbar sind.

8. Überwachungseinheit nach einem der Ansprüche 6 bis 7, wobei eine Speichereinheit 250 vorgesehen ist, in der Daten, die die Verarbeitungseinheit 230 benötigt, insbesondere das Positionsintervall (Δφ) und das Abfrageintervall (Δt), speicherbar sind.

9. Überwachungseinheit nach einem der Ansprüche 6 bis 8, wobei weiter eine Zeitmesseinheit (260) vorgesehen ist, mit der das Abfrageintervall (Δt) messbar ist.

10. Antriebssteuerung, umfassend eine Überwachungseinheit (200) nach einem der Ansprüche 6 bis 9.

**Claims**

1. Method for checking position values (φi-2, φi-1, φi) with a monitoring unit (200) supplied with position values (φi-2, φi-1, φi) of a position measuring device (20) at time intervals of a query interval (Δt), said method comprising the following steps:

• calculating a movement value (ω) from at least two position values (φi-2, φi-1) and the time interval between the arrival thereof,

• calculating an expected value (φE) for a position value (φi) to be checked, said position value following the at least two position values (φi-2, φi-1), by adding the most current of the at least two position values (φi-2, φi-1) and a change in position which emerges from the movement value (ω) and the time up to the arrival of the position value (φi) to be checked,

• determining an expected position interval (ΔφE) from the expected value (φE) and a max-

imum position interval ($\Delta\varphi$) which specifies the greatest change in position which may occur taking into account the error when determining the movement value $\omega$,

• comparing the position value ($\varphi i$) to be checked with the expected position interval ($\Delta\varphi E$) and
• outputting a signal (S) which indicates the result of the comparison.

2. Method according to Claim 1, wherein the movement value ($\omega$) is

• a speed value or
• an acceleration value or
• a jerk.

3. Method according to Claim 1, wherein the movement value ($\omega$) is an estimated speed value which is formed by forming the difference quotient from the two position values ($\varphi i-2$, $\varphi i-1$) which arrived last at the monitoring unit (200) and the query interval ($\Delta t$).

4. Method according to one of the preceding claims, wherein the expected position interval ($\Delta\varphi E$) is determined in the time prior to the arrival of the position value ($\varphi i$) to be checked.

5. Method according to one of the preceding claims, wherein the query interval ($\Delta t$) is measured in the monitoring unit (200) using a time measuring unit (260).

6. Monitoring unit for checking position values ($\varphi i-2$, $\varphi i-1$, $\varphi i$) which are transferred from a position measuring device (20) to a drive controller (100) at the time intervals of a query interval ($\Delta t$), comprising

• a processing unit (230) which is supplied with the position values ($\varphi i-2$, $\varphi i-1$, $\varphi i$) and which is configured to calculate a movement value ($\omega$) from at least two position values ($\varphi i-2$, $\varphi i-1$) and the time interval between the arrival thereof, to calculate an expected value ($\varphi E$) for a position value ($\varphi i$) to be checked, said position value following the at least two position values ($\varphi i-2$, $\varphi i-1$), by adding the most current of the at least two position values ($\varphi i-2$, $\varphi i-1$) and a change in position which emerges from the movement value ($\omega$) and the time up to the arrival of the position value ($\varphi i$) to be checked, and to determine an expected position interval ($\Delta\varphi E$) from the expected value ($\varphi E$) and a maximum position interval ($\Delta\varphi$) which specifies the greatest change in position which may occur taking into account the error when determining the movement value $\omega$, and comprising
• a comparator unit (240), by means of which the position value ($\varphi i$) to be checked is comparable with the expected position interval ($\Delta\varphi E$) and which may output a signal (S) which indicates the result of the comparison.

7. Monitoring unit according to Claim 6, wherein provision is made of a logging unit (220) which is supplied with interface signals and by means of which position values ($\varphi i-2$, $\varphi i-1$, $\varphi i$), which are contained in the interface signals, are separable and may be output to the processing unit 230 and the comparator unit 240.

8. Monitoring unit according to either of Claims 6 and 7, wherein provision is made of a memory unit 250, in which data required by the processing unit 230, in particular the position interval ($\Delta\varphi$) and the query interval ($\Delta t$), may be stored.

9. Monitoring unit according to one of Claims 6 to 8, wherein provision is further made of a time measuring unit (260), by means of which the query interval ($\Delta t$) is measurable.

10. Drive controller comprising a monitoring unit (200) according to one of Claims 6 to 9.

**Revendications**

1. Procédé de surveillance de valeurs de position ($\varphi i-2$, $\varphi i-1$, $\varphi i$) comportant une unité de surveillance (200) à laquelle sont délivrés, à des distances temporelles d'un intervalle d'interrogation ($\Delta t$), des valeurs de position ($\varphi i-2$, $\varphi i-1$, $\varphi i$) d'un appareil de mesure de position (20), comportant les étapes consistant à :

• calculer une valeur de mouvement ($\omega$) à partir d'au moins deux valeurs de position ($\varphi i-2$, $\varphi i-1$) et de la distance temporelle à laquelle elles se produisent,
• calculer une espérance ($\varphi E$) d'une valeur de position ($\varphi i$) à vérifier faisant suite à au moins deux valeurs de position ($\varphi i-2$, ($\varphi i-1$), par addition de la plus récente des au moins deux valeurs de position ($\varphi i-2$, $\varphi i-1$) et d'une variation de position qui résulte de la valeur de mouvement ($\omega$) et du temps s'écoulant jusqu'à ce que la valeur de position ($\varphi i$) à vérifier se produise,
• déterminer un intervalle d'espérance de position ($\Delta\varphi E$) à partir de l'espérance ($\varphi E$) et d'un intervalle de position maximal ($\Delta\varphi$) qui conduit à la variation de position la plus grande pouvant se produire lorsque l'erreur de détermination de la valeur de mouvement ($\omega$) est prise en compte,
• comparer la valeur de position ($\varphi i$) à vérifier à l'intervalle d'espérance de position ($\Delta\varphi E$), et
• fournir en sortie un signal (S) qui indique le résultat de la comparaison.

**2.** Procédé selon la revendication 1, dans lequel la valeur de mouvement (ω) est

• une valeur de vitesse, ou
• une valeur d'accélération, ou
• une secousse.

**3.** Procédé selon la revendication 1, dans lequel la valeur de mouvement (ω) est une valeur de vitesse estimée qui est déterminée par calcul du quotient de différences entre les deux valeurs de position (φi-2, φi-1) s'étant produites en dernier au niveau de l'unité de surveillance (200) et l'intervalle d'interrogation (Δt).

**4.** Procédé selon l'une quelconque des revendications précédentes, dans lequel la détermination de l'intervalle d'espérance de position (ΔφE) au cours du temps se produit avant que la valeur de position (φi) à vérifier se produise.

**5.** Procédé selon l'une quelconque des revendications précédentes, dans lequel l'intervalle d'interrogation (Δt) est mesuré dans l'unité de surveillance (200) au moyen d'une unité de mesure de temps (260).

**6.** Unité de surveillance destinée à surveiller des mesures de position (φi-2, φi-1, φi) qui sont transmises d'un appareil de mesure de position (20) à une unité de commande d'entraînement (100) à des distances temporelles d'un intervalle d'interrogation (Δt), comportant

• une unité de traitement (230) à laquelle sont délivrées les valeurs de position (φi-2, φi-1, φi) et qui est conçue pour calculer une valeur de mouvement (ω) à partir d'au moins deux valeurs de position (φi-2, φi-1) et de la distance temporelle où elles se produisent, pour calculer une espérance (φE) d'une valeur de position (φi) à vérifier faisant suite aux au moins deux valeurs de position (φi-2, φi-1), par addition de la plus récente des au moins deux valeurs de position (φi-2, φi-1) et d'une variation de position résultant de la valeur de mouvement (ω) et du temps s'écoulant jusqu'à ce que la valeur de position (φi) à vérifier se produise et pour déterminer un intervalle d'espérance de position (ΔφE) à partir de l'espérance (φE) et d'un intervalle de position maximal (Δφ) qui conduit à la variation de position la plus grande pouvant se produire lorsque l'erreur de détermination de la valeur de mouvement (ω) est prise en compte, et comportant également
• une unité de comparaison (240) au moyen de laquelle la valeur de position (φi) à vérifier peut être comparée à l'intervalle d'espérance de position (ΔφE) et par laquelle un signal (S) indiquant le résultat de la comparaison peut être délivré.

**7.** Unité de surveillance selon la revendication 6, dans laquelle il est prévu une unité de protocole (220) à laquelle sont délivrés des signaux d'interface et au moyen de laquelle des mesures de position (φi-2, φi-1, φi), qui sont contenues dans les signaux d'interface, peuvent être séparées et peuvent être fournies en sortie à l'unité de traitement (230) et à l'unité de comparaison (240).

**8.** Unité de surveillance selon l'une quelconque des revendications 6 à 7, dans laquelle il est prévu une unité de stockage (250) dans laquelle des données exigées par l'unité de traitement (230), notamment l'intervalle de position (Δφ) et l'intervalle d'interrogation (Δt), peuvent être stockées.

**9.** Unité de surveillance selon l'une quelconque des revendications 6 à 8, dans laquelle il est en outre prévu une unité de mesure de temps (260) au moyen de laquelle l'intervalle d'interrogation (Δt) peut être mesuré.

**10.** Unité de commande d'entraînement, comprenant une unité de surveillance (200) selon l'une quelconque des revendications 6 à 9.

FIG. 1

FIG. 2

S

240

250

$\Delta\varphi E$

230

260

$\varphi i$

220

210

FIG.3

EP 2 505 965 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004107068 A
- EP 0660209 B2
- EP 0171579 A1